Europäisches Patentamt

European Patent Office

Office européen des brevets

(19)

(11) Publication number: **0 331 759**
**A1**

(12)

# EUROPEAN PATENT APPLICATION
## published in accordance with Art. 158(3) EPC

(21) Application number: 88908340.8

(22) Date of filing: 19.09.88

(86) International application number:
PCT/JP88/00949

(87) International publication number:
WO 89/02620 (23.03.89 89/07)

(51) Int. Cl.⁴: G05B 19/403 , G05B 19/405

(30) Priority: 19.09.87 JP 235477/87

(43) Date of publication of application:
13.09.89 Bulletin 89/37

(84) Designated Contracting States:
DE FR GB IT

(71) Applicant: FANUC LTD
3580, Shibokusa Aza-Komanba Oshino-mura
Minamitsuru-gun Yamanashi 401-05(JP)

(72) Inventor: MATSUMURA, Teruyuki
38-8, Matsugaya
Hachioji-shi Tokyo 192-03(JP)
Inventor: NAGASHIMA, Noritake
4193-20, Shimotsuruma
Yamato-shi Kanagawa 242(JP)

(74) Representative: Billington, Lawrence Emlyn et
al
HASELTINE LAKE & CO Hazlitt House 28
Southampton Buildings Chancery Lane
London WC2A 1AT(GB)

(54) AUTOMATIC PROGRAMMING DEVICE.

(57) An automatic programming device for preparing
an NC program in an interactive manner on a display
unit. In defining the shape of a portion to be machin-
ed by the NC apparatus, the defined shape is drawn
on the screen. Element symbol keys and numeric
keys are used for input operation. An arrow cor-
responding to an element symbol is indicated on the
corresponding portion of the shape on the display
screen. Pressing a numeric key in this state changes
the shape so that it has a length corresponding to
the numeric values.

Fig. 2 (B)

## AUTOMATIC PROGRAMMING APPARATUS

Technical Field

This invention relates to an automatic programming apparatus for creating a program while displaying a tool path or the like on a screen.

Background Art

When automatic programming is being performed, ordinarily a shape definition which specifies a shape such as a tool trajectory is required. In order to carry out such a shape definition, suitable element symbol keys on a keyboard are selected in accordance with a drawing, data regarding dimensions required subsequently is entered by numeric keys, and shape data necessary for specifying a shape is entered. When element data from among shape data is inputted using a prompt screen regarding a shape displayed on the screen, an arrow, by way of example, is displayed on the screen as a selected character. Next, when the screen is changed over to prompts regarding dimensions and numeric data is entered in accordance therewith, shape definition regarding one trajectory element is completed at this time and the predetermined shape is displayed.

When the prompt screen for element data changes to the prompt screen regarding dimensions, the character corresponding to the abovementioned element data is displayed at a position different from the display of the shape already appearing on the display screen. For example, the character is displayed at the upper part of the screen. Consequently, though the screen presents the operator with a display of the element symbol just entered, it is not easy for an operator who is unskilled at programming to accurately specify the numeric data, which is to be entered next, in relation to an element symbol which has moved to another position.

In other words, with this conventional automatic programming apparatus, it is difficult to clearly ascertain from the screen what relationship exists between the position and direction of a trajectory element to be inputted next and the shape that has already been inputted by a plurality of steps.

Disclosure of the Invention

The present invention has been devised in order to solve the foregoing problem and its object is to provide an automatic programming apparatus in which it is easy to grasp the relationship between a displayed shape and input data at the time of shape definition using a screen.

In accordance with the present invention, there can be provided an automatic programming apparatus for automatically creating a program which designates a tool trajectory by shape definition, characterized by comprising input means for inputting shape data which defines a shape from element symbol keys and numeric keys, and display means for displaying a shape defined by already entered shape data, and for displaying element data, which is entered by the element symbol keys, as characters connected to a displayed defined shape.

Thus, the automatic programming apparatus of the invention is such that when there is a shape displayed on the display means, element data entered from the input means can be displayed as characters connected to the already entered displayed shape.

Brief Description of the Drawings

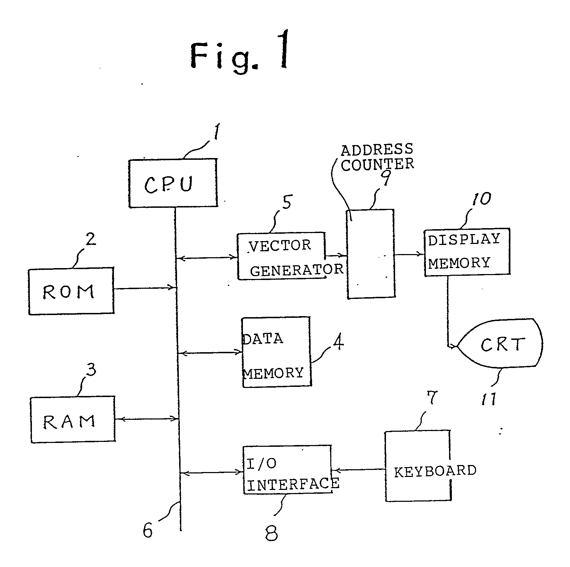

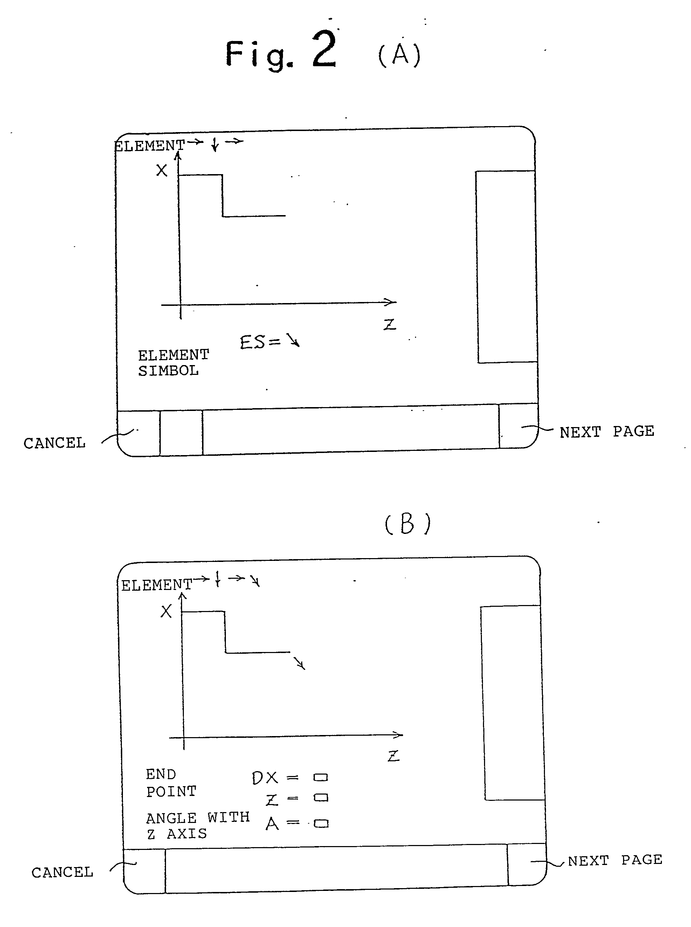

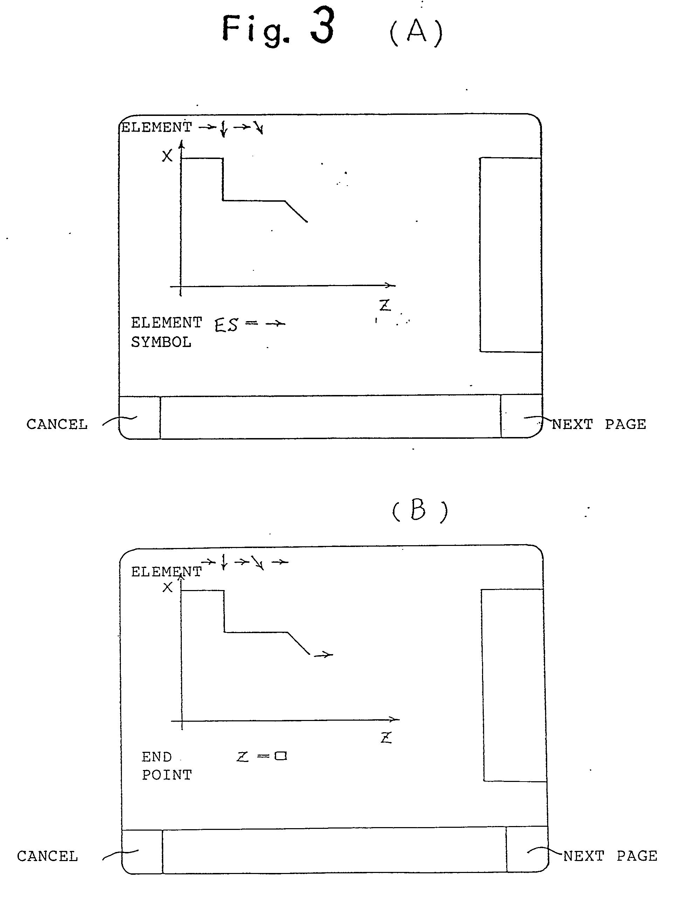

Fig. 1 is a block diagram illustrating an embodiment of the present invention, Figs. 2(A), (B) are explanatory views illustrating an example of a display screen, and Figs. 3(A), (B) are explanatory views illustrating another example of a display screen.

Best Mode for Carrying Out the Invention

An embodiment of the present invention will now be described in detail with reference to the drawings.

Fig. 1 is a block diagram illustrating an embodiment of the present invention. A CPU 1 performs processing necessary for designating a tool trajectory by shape definition. A ROM 2 stores a control program necessary for this processing. Image data necessary for conversational-type shape definition is stored in a RAM 3. An NC data memory 4 stores automatically created program data. A vector generator 5 forms shape display data by image information converted from entered shape data. All of these units are connected to the CPU 1 by a bus line 6.

Numeral 7 denotes a keyboard having a plurality of element symbol keys and numeric keys from which shape data for defining a shape are entered. The keyboard 7 is connected to the bus line 6 via an I/O interface 8. The vector generator 5 is connected to a display memory 10 for storing a shape defined by shape display data which enters via an address counter 9. The memory stores the subject matter displayed by a display unit 11.

Fig. 2 shows views for describing a shape display presented by the display unit 11. Fig. 2(A) illustrates three shape elements defined in a Z-X plane and a display for inputting a fourth trajectory element following the three shape elements. Element symbols (ES) regarding shape data entered up to the present time are displayed at the upper part of the screen. Element data to be inputted next is character-displayed at the lower portion of the screen by a downwardly slanting arrow. Upon confirming that element data along a shape on a design drawing is to be entered, the operator enters this data by an input key on the keyboard. When this is done, the screen displays prompts regarding a coordinate DX or Z as well as an angle A formed with the Z axis at the end point, and the character display indicated by the previous arrow is moved to the tail end of the series of element symbols at the upper part of the screen and to a position at which it will be connected to the shape being displayed.

More specifically, the element presently being inputted is displayed as a character connected to the shape displayed. Therefore, in entering the numeric data, the operator is capable of visually ascertaining the designating direction. When the numeric data is subsequently entered, the shape based on the numeric data is displayed upon being replaced by an arrow, and the screen for inputting the element symbol (ES) reappears.

Figs. 3(A), (B) show an example of a case in which shape definition is performed by inputting rightwardly directed arrow as an element symbol key. As in the case of Fig. 2, the entered element data is displayed as a character connected to the displayed shape.

When a display is presented in this manner, the position and direction of an element to be entered can be visually verified on a graphic by an operator even if the trajectory displayed is a complicated one. This minimizes mistakes and facilitates shape definition key operation.

Though an embodiment of the invention has been described, the invention is not limited thereto but can be modified in various ways without departing from the scope of the claims.

Industrial Applicability

The automatic programming apparatus of the invention is such that when conversational-type automatic programming is performed, the direction of a trajectory to be defined is temporarily displayed at a position connected to a shape, which is being displayed, while dimensions are being entered. This makes it possible to readily grasp the relationship between a displayed shape and input data.

Claims

1. An automatic programming apparatus for automatically creating a program which designates a tool trajectory by shape definition in accordance with a display on a prompt screen, comprising:
input means for inputting shape data for performing shape definition in response to pressing of symbol element keys and numeric keys in accordance with the prompt screen; and
display means for displaying a shape defined by already entered shape data, and for displaying element data, which is entered by said element symbol keys, as characters connected to a displayed defined shape.

2. An automatic programming apparatus according to claim 1, characterized in that said input means includes element symbol keys for defining linear shapes and circular arcuate shapes.

3. An automatic programming apparatus according to claim 1, characterized in that said display means has a function for displaying entered element data at a position different from that of a character connected to the defined shape.

# Fig. 1

# Fig. 2 (A)

ELEMENT

X

ES = ↘

ELEMENT
SIMBOL

Z

CANCEL

NEXT PAGE

# (B)

ELEMENT

X

Z

END
POINT

DX = ▭

Z = ▭

ANGLE WITH
Z AXIS

A = ▭

CANCEL

NEXT PAGE

# Fig. 3 (A)

ELEMENT → ↓ → ↘

X

Z

ELEMENT $ES = →$
SYMBOL

CANCEL

NEXT PAGE

## (B)

ELEMENT → ↓ → ↘ →

X

Z

END
POINT $Z = □$

CANCEL

NEXT PAGE

# INTERNATIONAL SEARCH REPORT

International Application No  PCT/JP88/00949

## I. CLASSIFICATION OF SUBJECT MATTER (if several classification symbols apply, indicate all) 6

According to International Patent Classification (IPC) or to both National Classification and IPC

Int.Cl⁴    G05B19/403, 19/405

## II. FIELDS SEARCHED

| Minimum Documentation Searched 7 | |
|---|---|
| Classification System | Classification Symbols |
| IPC | G05B19/403, 19/405 |

| Documentation Searched other than Minimum Documentation to the Extent that such Documents are Included in the Fields Searched 8 | |
|---|---|
| Jitsuyo Shinan Koho | 1971 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 57-19809 (Fanuc Ltd.) 2 February 1982 (02. 02. 82) Page 6, lower right column, line 3 to page 7, upper right column, line 11 & EP, A, 44192 & US, A, 4490781 & KR, B, 8500362 | 1-3 |
| A | JP, A, 59-208634 (Fanuc Ltd.) 27 November 1984 (27. 11. '84) Page 3, upper left column, line 15 to lower right column, line 11 & WO, A, 8404611 & EP, A, 148947 | 1-3 |

* Special categories of cited documents: 10

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 28, 1988 (28. 11. 88) | December 12, 1988 (12. 12. 88) |
| International Searching Authority | Signature of Authorized Officer |
| Japanese Patent Office | |

Form PCT/ISA/210 (second sheet) (January 1985)